# EUROPEAN PATENT SPECIFICATION

(11) **EP 0 936 380 B1**
(45) Date of publication and mention of the grant of the patent: **25.09.2002**
(21) Application number: 98200446.7
(22) Date of filing: 13.02.1998
(51) Int. Cl.: F16H 25/20, F16H 61/32, F16H 63/30

(54) **A linear actuator**
Linearantrieb
Actuateur linéaire

(43) Date of publication of application: 18.08.1999
(73) Proprietor: Interpump Hydraulics S.p.A., 41015 Nonantola (MO) (IT)
(72) Inventor: Prampolini, Silvano, 41030 Bomporto (MO) (IT)
(74) Representative: Gotra, Stefano

(56) References cited:
- EP-A- 0 727 601
- GB-A- 2 066 207
- US-A- 2 927 473
- US-A- 4 498 350

## Description

The invention relates to a linear actuator. In particular, though not exclusively, the invention is advantageously applicable for the actuation of cog meshes, such as, for example, power take-offs applied to vehicle transmissions.

Power take-offs are constituted by more or less complex devices having an output shaft which can be connected to and disconnected from a series of gearings receiving drive directly from the gear box of the vehicle.

Enmeshing and disengagement of the take-off are generally achieved through axial displacements of a gear wheel which, in order to make the connection, has to be enmeshed with a corresponding gear wheel receiving drive directly from the gearbox. The enmeshing (without synchronisation) is usually achieved by means of mechanical actuators, either pneumatic or electric.

In some electric actuators, solenoids are used, which however have the drawbacks of being very large and providing only a very limited useful actuation run.

Other electric actuators use electric motors which actuate screw transmissions with bearing recirculation and which are governed by complex electronic control circuits. The enmeshing action requires a "dosed" sequential execution, having a very precise succession of operative phases.

The axially mobile gear wheel must be brought into contact with an axially fixed gear, then to be kept pressed against the latter up until, by effect of a relative rotation, the cogs of one of the gear wheels coincide with intercog spaces in the other, thus making enmeshing possible.

In order to carry out the above-described operative phases, special considerations have to be made (for example, the use of a screw transmission with bearing circulation) as well as a fine and sophisticated adjustment of the electric motor actuated by means of a complex and expensive control circuit.

Also known is a type of actuator in which an electric motor draws in rotation, usually with an axially slidable cogged coupling, an axially-slidable intermediate rotating body. A screw, not rotatable, coupled with a lead screw bored coaxially in the intermediate body, constitutes the moving organ of the actuator in which the positioning of the intermediate body in the direction of the mesh is not rigid, but rather mediated by a specially calibrated spring. The same intermediate body, retreating following a missed enmeshing - since on enmeshing the screw is immediately locked - acts rigidly on a slidable rod directly commanding an endrun switch whose activation causes the motor to stop. When complete enmeshing is achieved, the screw head, retreating with respect to the intermediate body, ends by acting directly on another endrun switch, stopping the motor.

EP 727 601 A is an example of the known art and discloses a linear actuator, comprising a frame (16) and a rotating intermediate body (14), free in rotation with respect to said frame, which rotating body (14) is provided with an external crown wheel which enmeshes with a pinion (4) fixed to an end of a shaft of an electric motor (2), and which rotating body (14) is further provided with a through lead screw arranged coaxially thereto; said body (14) being able to slide axially in two directions with a run of predetermined entity which maintains a mesh between said external crown wheel and said pinion (4); further comprising: a calibrated spring (18) operating coaxially between said frame (16) and said body (14); a screw (24) which is coaxially coupled with said lead screw and which exhibits a first end which is coupled with a predisposed seating (23) on said frame (16) with a coupling that prevents relative rotation while allowing free axial sliding; at least one switch (8) which controls said electric motor (2), which at least one switch (8) is activated by said rotating body (14), said switch (8) being actuated by said rotating body (14) with a relative sliding movement in which the body (14) is never mechanically rigidly constrained to said switch (8).

The above-described device presents functional drawbacks originating for the main part from the fact that the positioning of the organs actuating the switches is not sufficiently precisely repeatable. The actuator is therefore rather unreliable.

The main aim of the present invention is to obviate the limits and drawbacks in the prior art, and especially to remove all causes of that unreliability which is typical of the last-described prior art, and in particular to obtain a gentle and gradual actuating of the switch.

The constructional and functional simplicity of the invention are of undoubted advantage.

These aims and advantages and others besides are all attained by the present invention, as it is characterised in the appended claims.

Further characteristics and advantages of the present invention will better emerge from the detailed description that follows of some preferred but non-exclusive embodiments of the invention, illustrated purely by way of nonlimiting example in the accompanying figures of the drawings, in which:

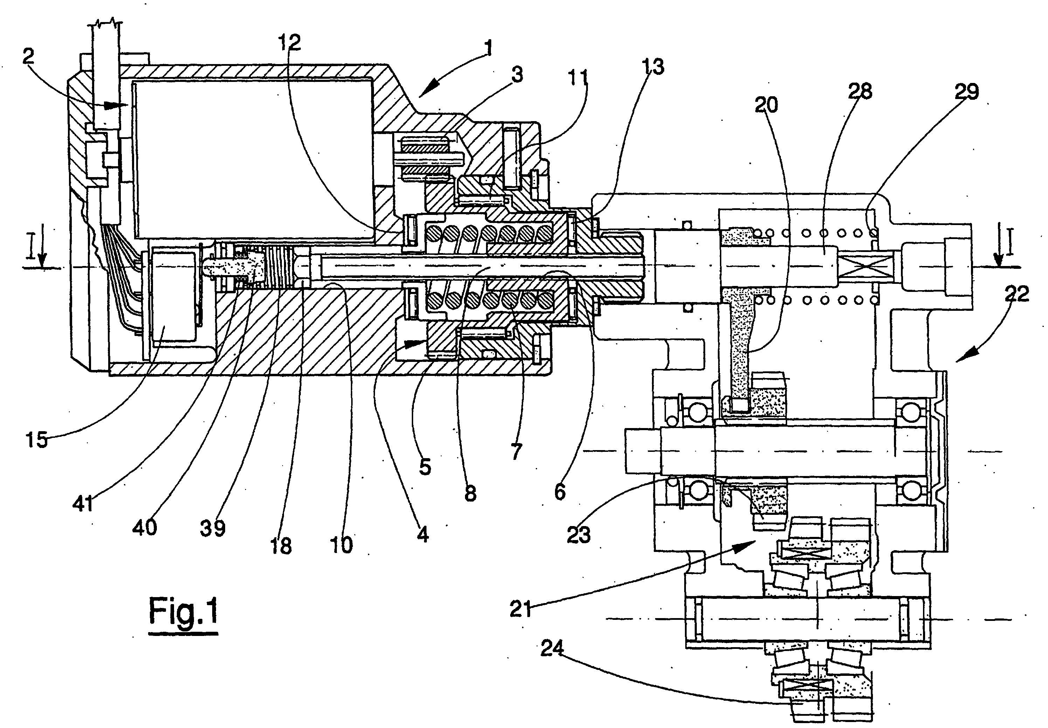

figure 1 shows a schematic longitudinal section;
figure 2 shows part of a schematic section made according to line I-I of figure 1;
figure 3 shows the same section as in figure 2 but relating to a second embodiment of the invention.

With reference to the figures of the drawings, 1 denotes in its entirety a box-shaped frame internally of which a d.c. electric motor is housed, having a pinion 3 on the shaft thereof.

An external crown wheel 5, provided on an intermediate rotating body 4, enmeshes with the pinion 3. The intermediate rotating body 4 is freely supported on the frame 1 by means of a roller housing 11. The body 4 is internally hollow and exhibits, arranged coaxially to the external crown wheel 5, a through lead screw 6, in which a screw 8 is coaxially housed The body 4 can translate axially with a predetermined run which is sufficient to maintain the mesh between the crown wheel 5 and the pinion 3 independently of the axial position assumed by the body 4 with respect to the pinion 3. A calibrated spring 7 is provided to operate coaxially between the frame 1 and the body 4.

In particular, the spring 7 is predisposed internally of the body 4 and operates between the body 4 and a thrust bearing 12. A further thrust bearing 13 is predisposed to operate between the housing containing the end of the body 4 and the body 4 itself in the spring 7 maximum excursion position.

The screw 8 bears at an end thereof a hexagonal head 18 which is contained internally of a sliding guide 10, made solid to the frame 1, in which the head 18 is coupled with a predetermined play.

The above-described coupling has the aim of allowing the screw 8 to translate freely along the axis, preventing any rotation thereof with respect to the frame 1.

The other end of the screw 8 acts on a manoeuvring organ 20 of a gear engagement 21 which is part of a power take-off denoted in its entirety by 22.

The manoeuvring organ 20, actuated by an axial displacement of the screw 8, has the well-defined task of axially displacing a gear wheel 23 in order to produce a meshing (or disengagement) with a gear wheel 24 rotating connected to the mechanical transmission (gear box) the power take-off 22 is applied to.

The body 4, once a predetermined spring 7 compression position has been reached, is able to act on an endrun switch 9 which, when actuated, causes the motor 2 to stop.

The body 4 acts on the endrun switch 9 not directly, but by means of elastically deformable means of transmission in a parallel direction to the rotation axis of the rotating body 4 itself. The means of transmission comprise: a mobile spacer 34, a first elastically deformable element, or spring 35, an endrun pivot 36 - destined to operate directly in contact on the switch 9 - and a second elastically deformable element, or contrast spring 37. All the above elements are aligned and axially slidingly guided.

The mobile spacer 34 is provided with an end which is predisposed to come into direct contact with the front part of the intermediate body 4.

The spring 35 is predisposed to operate between the mobile spacer 34 and the endrun pivot 36.

The contrast spring 37 is predisposed to operate between the endrun pivot 36 and a striker 38 fixed to the frame 1.

The spring 35 is more rigid than the contrast spring 37, and is coaxial thereto. The endrun switch 9 is materially activated by the endrun pivot 36 every time, owing to the retreat of the body 4, the spring 35 pushes the pivot against the switch 9, overcoming the antagonist action of the contrast spring 37. In this way the action of the endrun pivot 36 on the switch is gentle and gradual and is not influenced by the inertia of the system which inevitably permits neither instantaneous arrest of the body 4 nor a precise axial repositioning thereof at every cycle. The presence of the spring 35 means that these effects are "absorbed" without their being transmitted to the endrun pivot 36.

A return endrun switch 15 is provided for stopping the rotation of the motor 2 when the screw 8 is completely retracted, in the position corresponding to complete disengagement.

The return endrun switch 15 can be activated by the head 18 of the screw 8 in the extreme, maximum-retraction position of the screw itself with respect to the frame 1, by means of a transmission device which is elastically deformable and which comprises, aligned and guided to slide axially one consecutively to another, an elastically deformable element or spring 39, an endrun pivot 40 and an elastically deformable element or contrast spring 41. The spring 39 is predisposed to operate between the head 18 of the screw 8 and the endrun pivot 40. The contrast spring 41 is predisposed to operate between the endrun pivot 40 and a striker 42 fixed to the frame 1.

In this case too the action of the endrun pivot 40 on the switch 15 is gentle and gradual and is not influenced by the inertia of the system, which inevitably allows neither an instantaneous arrest of the screw 8 nor a precise axial repositioning thereof for each cycle. The presence of the spring 39 enables these effects to be "absorbed" without their being transmitted to the endrun pivot 40.

The engagement or disengagement command can be made using a simple engagement button, not illustrated, located close to the operator on a control panel, which can also be provided with a luminous indicator signalling that the engagement operation is under way. A disengagement button is also provided on the same control panel.

When the engagement button is pressed, the motor 2 is activated, with a rotation direction that produces, by effect of the coupling of the body 4 with the screw 8, an advancement of the screw 8 in the enmeshing direction.

By pressing the disengagement button, the rotation direction of the motor 2 is inverted, with the result that by effect of the coupling of the body 4 with the screw 8, the screw 8 is recalled and causes disengagement, that is, the axial distancing of the wheel 23 with respect to the gear wheel 24.

Thus, during the enmeshing phase, the rotation induced on the body 4 produces the advancement of the screw 8, at which the manoeuvring organ 20 brings wheel 23 against wheel 24. If the gears on the wheel 23 are perfectly synchronised with respect to the inter-gear gaps on wheel 24, enmeshing occurs without any problem.

In the statistically very frequent case that the gears on wheel 23 are not in perfect synchronisation with the inter-gear gaps on wheel 24, no enmeshing occurs. The axial advancement of the screw 8 therefore stops. The body 4 continues to rotate, however, with respect to the screw 8 and displaces axially with respect thereto, compressing the spring 7 and thus forcing the spacer 34 to displace axially and compress spring 35, which latter, pressing on the pivot 36 and overcoming the antagonist action exerted by spring 37, presses the endrun pivot 36 and casues it to interact with the endrun switch 9. The activation of the switch 9, which stops the motor 2, does not necessarily product an instantaneous lock of the whole kinematic chain of the mechanism.

Thus instantaneous arrest of the spacer 34 in an always-identical position cannot occur, so that there is an overrun. The interposition of the spring 35 between the spacer 34 and the endrun pivot 36 allows the spacer 34 itself to stop anywhere without rigidly acting on the endrun pivot 36, thus safeguarding the switch 9. In other words, the inevitable overrun is "absorbed" by the elastic deformation of the spring 35, with no other consequences.

When the motor is off, the screw 8 keeps the manoeuvring organ 20 under pressure and thus keeps the gear wheel 23 against the gear wheel 24 with a maximum force which is predetermined by the axial thrust exerted by the spring 7. This keeps the enmeshing system under a predetermined axial pressure without there being any dissipation of energy due to the motor being off.

When, following a small rotation impressed by the operator on gear wheel 24 with respect to gear wheel 23, the gears of wheel 23 become perfectly synchronised with the intergears of wheel 24, enmeshing can take place. It is the action of the spring 7 which pushes the wheel 23 in the enmeshing direction and starts actuation.

As soon as the body 4 is distanced, by effect of the axial movement of the screw 8, the motor 2 starts up once more, because the switch 9 is released.

Thus engagement can take place, and will terminate when the rod 28, on whch the manoeuvring organ 20 is fixed, will strike with an end thereof against a striker 29 afforded in the body of the power take-off 22.

When the striker 29 is reached, the screw 8 advancement stops, while the body 4 continues to rotate, displacing axially and compressing the springs 35 and 37 which cause the axial displacement of the endrun pivot 36, which again causes activation of the endrun switch 9, and, consequently, the arrest of the motor 2.

The engagement is now complete.

It is worth noting that the determination of the position of the rod 28 endrun and the activation of the switch 9 are not reciprocally obligated. This means that the actuator itself can be applied to various power take-offs, characterised by different engagement run lengths. These characteristics of the invention make it suitable for use not only as a linear actuator for power take-off gear engagements, but also for all those applications for which an actuator is required which automatically stops its own action when a resistance of a predetermined entity obtains, then to resume its action, also automatically, when that resistance is no longer present.

An appropriate choice of the spring 7 characteristics further allows establishment of a desired axial pressure on the basis of which the actuator can operate.

During disengagement, by effect of the inversion of the rotation direction of the motor 2, the screw 8 retreats, gradually disengaging gear wheel 23 from gear wheel 24. The retreat occurs when the head of the screw 8, through the spring 25, forces the endrun pivot 40 to activate the return endrun switch 15, which activation causes the motor 2 to stop.

In this case too, the action on the endrun pivot 40 is mediated by the spring 25, which operates antagonistically against the least resistant spring 41 and which is able to absorb any extra run of the head 18 of the screw 8.

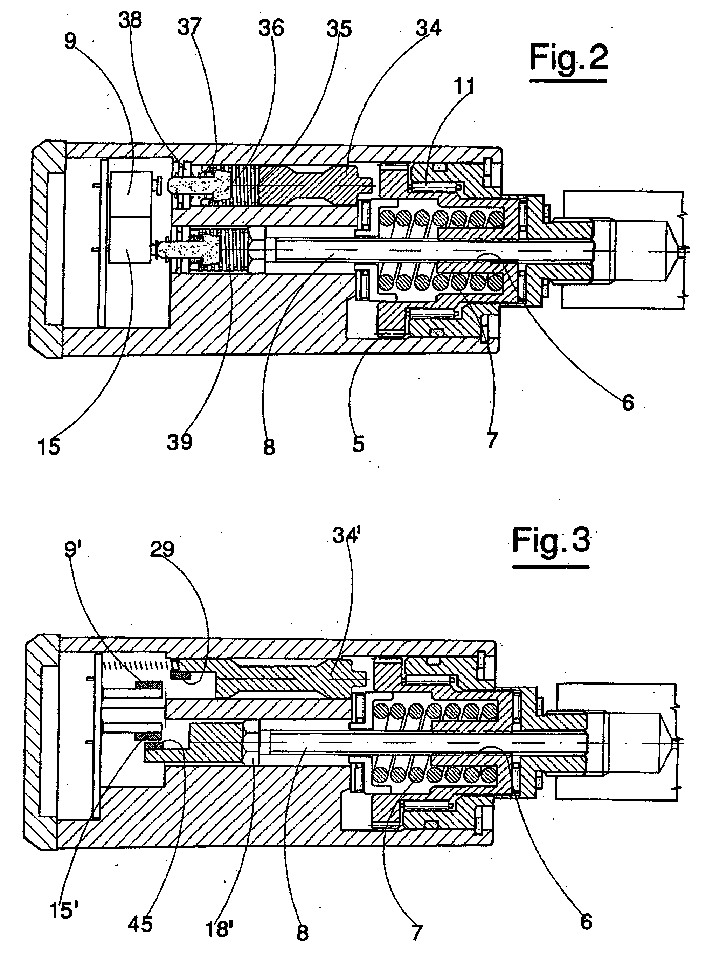

In a second embodiment of the invention, illustrated in figure 3, in the place of the switches 9 and 15, magnetically-activated switches 9' and 15' are provided.

In this embodiment, to the ends of the spacer 34' and the head 18', corresponding to the spacer 34 and the head 18 of the previous embodiment, are applied actuation elements 29 and 45, constituted for example by small magnets. The elements 29 and 45 are arranged so as to be freely translatable in a parallel direction to the actuator axis, with the possibility of locating in various positions with respect to the relative switches, without interacting mechanically therewith. The interaction is only of an electromagnetic type.

Apart from as an enmeshing command, especially for power take-offs, the invention can be used as an actuator organ in other applications: for example, opening or closure of gates, where the opening or closing motion has to be stopped when the operation encounters a force which is superior to a predetermined limit value.

## Claims

1. A linear actuator, especially for cog meshes, comprising a frame (1) and a rotating intermediate body (4), free in rotation with respect to said frame (1), which rotating body (4) is provided with an external crown wheel (5) which enmeshes with a pinion (3) fixed to an end of a shaft of an electric motor (2), and which rotating body (4) is further provided with a through lead screw (6) arranged coaxially thereto; said body (4) being able to slide axially in two directions with a run of predetermined entity which maintains a mesh between said external crown wheel (5) and said pinion (3); further comprising: a calibrated spring (7) operating coaxially between said frame (1) and said body (4); a screw (8) which is coaxially coupled with said lead screw (6) and which exhibits a first end which is coupled with a predisposed seating on said frame (1) with a coupling that prevents relative rotation while allowing free axial sliding; at least one switch (9, 9') which controls said electric motor (2), which at least one switch (9, 9') is activated by said rotating body (4), said switch (9,9') being actuated by said rotating body (4) with a relative sliding movement in which the body (4) is never mechanically rigidly constrained to said switch (9, 9'),
**characterised in that** said switch (9) is actuated by said rotating body (4) through elastically deformable means for transmission.

2. The linear actuator of claim 1, **characterised in that** said means for transmission are elastically deformable in a parallel direction to the rotation axis of the rotating body (4).

3. The linear actuator of claim 2, **characterised in that** said means for transmission comprise, aligned and guided to slide axially one consecutively to another, a mobile spacer (34), a spring (35), an endrun pivot (36) and a contrast spring (37); said mobile spacer (34) having an end which is predisposed to come into direct contact with the front part of said rotating intermediate body (4); said spring (35) being predisposed to operate between said mobile spacer (34) and said endrun pivot (36); said contrast spring (37) being predisposed to operate between said endrun pivot (36) and a striker (38) fixed to the frame (1).

4. The linear actuator of claim 3, **characterised in that** said spring (35) is stiffer than the contrast spring (37), to which it acts coaxially.

5. The linear actuator of claim 4, **characterised in that** said first end of the screw (8) exhibits a hexagonal head (18) which is contained internally of and is coupled with predetermined play to a sliding guide (10) which is solid to the frame (1).

6. The linear actuator of claim 4, **characterised in that** said switch (9) is predisposed in such a way as to be activated when said body (4) is in an extreme axial position at which said spring (7) exerts a predetermined axial force.

7. The linear actuator of claim 4, **characterised in that** it comprises a return endrun switch (15) which is activatable by the head (18) of the screw (8) in an extreme position of maximum entry of the screw (8) with respect to the frame (1) by means of a transmission device which is elastically deformable.

8. The linear actuator of claim 7, **characterised in that** said transmission device is elastically deformable in a parallel direction to the screw (8) axis.

9. The linear actuator of claim 8, **characterised in that** said transmission device comprises, aligned and guided to slide axially one consecutively to another, a mobile spacer (34), a spring (39), an endrun pivot (40) and a contrast spring (41); said spring (39) being predisposed to operate between the head (18) of the screw (8) and said endrun pivot (40); said contrast spring (41) being predisposed to operate between said endrun pivot (40) and a striker (42) fixed to the frame (1).

10. The linear actuator of claims 1 or 6, **characterised in that** said switch (9') is actuated by an actuating element (29) which is constrained to a mobile spacer (34'), another end of which mobile spacer (34') is predisposed to contact directly with a front part of said intermediate rotating body (4), and is mobile in a parallel direction to a rotation axis of the body (4); said actuating element (29) being predisposed to be freely translatable to a short distance from said switch (9') without mechanically interfering there-with.

11. The linear actuator of claims 1 or 10, **characterised in that** it comprises a return endrun switch (15') which is actuable by means of the screw (8) in a position of maximum entrance with respect to the frame (1).

12. The linear actuator of claim 11, **characterised in that** said switch (15') is actuated by an actuating element (45) which is constrained to a support fixed to a head (18') of the screw (8); said actuation element 45) being predisposed to be freely translatable to a short distance from said switch (15') without mechanically interfering there-with.

13. The linear actuator of any one of the preceding claims, **characterised in that** the second end of the screw (8) acts on a manoeuvring organ (20) of a cog wheel (21).

## Patentansprüche

1. Linearantrieb, insbesondere für Zahneingriffe, enthaltend einen Rahmen (1) und einen rotierenden Zwischenkörper (4), der sich im Verhältnis zu dem genannten Rahmen (1) frei dreht, welcher rotierende Körper (4) mit einem äusseren Kronenrad (5) versehen ist, welches in ein Ritzel (3) greift, das an einem Ende einer Welle eines Elektromotors (2) befestigt ist, und welcher rotierende Körper (4) ausserdem mit einer koaxial zu diesem angeordneten durchgehenden Führungsschraube (6) versehen ist; wobei der genannte Körper (4) in der Lage ist, axial in zwei Richtungen zu gleiten, und zwar mit einem Hub von festgelegter Grösse, welcher aber den Eingriff zwischen dem genannten äusseren Kronenrad (5) und dem genannten Ritzel (3) beibehält; und wobei weiter enthalten ist: eine kalibrierte Feder (7), die koaxial zwischen dem genannten Rahmen (1) und dem genannten Körper (4) arbeitet; eine Schraube (8), welche koaxial mit der genannten Führungsschraube (6) verbunden ist und ein erstes Ende aufweist, das mit einem an dem genannten Rahmen (1) vorgesehenen Sitz verbunden ist, und zwar mit einer Verbindung, welche die entsprechende Umdrehung verhindert, während sie das freie axiale Gleiten erlaubt; wenigstens ein Schalter (9, 9'), welcher den genannten Elektromotor (2) steuert, welcher wenigstens eine Schalter (9, 9') von dem genannten rotierenden Körper (4) aktiviert wird, wobei der genannte Schalter (9, 9') durch den genannten rotierenden Körper (4) mit einer entsprechenden Gleitbewegung betätigt wird, bei welcher der Körper (4) niemals mechanisch starr an dem genannten Schalter (9, 9') gehalten ist, **dadurch gekennzeichnet, dass** der genannte Schalter (9) von dem genannten rotierenden Körper (4) durch elastisch verformbare Übertragungsmittel ausgelöst wird.

2. Linearantrieb nach Patentanspruch 1, **dadurch gekennzeichnet, dass** die genannten Übertragungsmittel in einer parallelen Richtung zu der Drehachse des rotierenden Körpers (4) verformbar sind.

3. Linearantrieb nach Patentanspruch 2, **dadurch gekennzeichnet, dass** die genannten Übertragungsmittel, ausgerichtet und geführt, um axial aufeinanderfolgend eins nach dem anderen zu gleiten, ein bewegliches Abstandsstück (34), eine Feder (35), einen Anschlagzapfen (36) und eine Gegendruckfeder (37) enthalten; wobei das genannte bewegliche Abstandsstück (34) ein Ende aufweist, das dazu vorgesehen ist, in direkten Kontakt mit dem Frontteil des genannten rotierenden Zwischenkörpers (4) zu gelangen; wobei die genannte Feder (35) dazu vorgesehen ist, zwischen dem genannten beweglichen Abstandsstück (34) und zwischen dem genannten Anschlagzapfen (36) zu arbeiten; und wobei die genannte Gegendruckfeder (37) dazu vorgesehen ist, zwischen dem genannten Anschlagzapfen (36) und einem an dem Rahmen (1) befestigten Anschlag (38) zu arbeiten.

4. Linearantrieb nach Patentanspruch 3, **dadurch gekennzeichnet, dass** die genannte Feder (35) starrer ist als die Gegendruckfeder (37), auf welche sie koaxial wirkt.

5. Linearantrieb nach Patentanspruch 4, **dadurch gekennzeichnet, dass** das genannte erste Ende der Schraube (8) einen Sechskantkopf (18) aufweist, aufgenommen im Inneren einer Gleitführung (10) und mit einem bestimmten Spiel mit dieser verbunden, welche fest an dem Rahmen (1) angebracht ist.

6. Linearantrieb nach Patentanspruch 4, **dadurch gekennzeichnet, dass** der genannte Schalter (9) auf solche Weise ausgelegt ist, dass er ausgelöst wird, wenn sich der genannte Körper (4) in einer extremen axialen Position befindet, in welcher die genannte Feder (7) einen bestimmten axialen Druck ausübt.

7. Linearantrieb nach Patentanspruch 4, **dadurch gekennzeichnet, dass** er einen Rücklauf-Endschalter (15) enthält, welcher durch den Kopf (18) der Schraube (8) aktivierbar ist, und zwar in einer extremen Position des maximalen Rückzugs der Schraube (8) im Verhältnis zu dem Rahmen (1), mit Hilfe einer Übertragungsvorrichtung, die elastisch verformbar ist.

8. Linearantrieb nach Patentanspruch 7, **dadurch gekennzeichnet, dass** die genannte Übertragungsvorrichtung in einer parallelen Richtung zu der Achse der Schraube (8) elastisch verformbar ist.

9. Linearantrieb nach Patentanspruch 8, **dadurch gekennzeichnet, dass** die genannte Übertragungsvorrichtung, ausgerichtet und geführt, um axial aufeinanderfolgend eins nach dem anderen zu gleiten, ein bewegliches Abstandsstück (34), eine Feder (39), einen Anschlagzapfen (40) und eine Gegendruckfeder (41) enthält; wobei die genannte Feder (39) dazu vorgesehen ist, zwischen dem Kopf (18) der Schraube (8) und dem genannten Anschlagzapfen (40) zu arbeiten; und wobei die genannte Gegendruckfeder (41) dazu vorgesehen ist, zwischen dem genannten Anschlagzapfen (40) und einem an dem Rahmen (1) befestigten Anschlag (42) zu arbeiten.

10. Linearantrieb nach den Patentansprüchen 1 oder 6, **dadurch gekennzeichnet, dass** der genannte Schalter (9') durch ein Auslöseelement (29) betätigt wird, welches an einem beweglichen Abstandsstück (34') gehalten ist, und ein anderes Ende des beweglichen Abstandsstückes (34') ist dazu vorgesehen, direkt mit einem Frontteil des genannten rotierenden Zwischenkörpers (4) in Kontakt zu gelangen, und ist beweglich in einer parallelen Richtung zu einer Drehachse des Körpers (4); wobei das genannte Auslöseelement (29) dazu vorgesehen ist, bis auf einen kurzen Abstand von dem genannten Schalter (9') frei verschiebbar zu sein, ohne mechanisch auf dieses einzuwirken.

11. Linearantrieb nach Patentanspruch 10, **dadurch gekennzeichnet, dass** er einen Rücklauf-Endschalter (15') enthält, welcher mit Hilfe der Schraube (8) in einer Position des maximalen Rückzugs im Verhältnis zu dem Rahmen (1) zu betätigen ist.

12. Linearantrieb nach Patentanspruch 11, **dadurch gekennzeichnet, dass** der genannte Schalter (15') durch ein Auslöseelement (45) betätigt wird, welches an einer an einem Kopf (18') der Schraube (8) befestigten Halterung gehalten ist; wobei das genannte Auslöseelement (45) dazu vorgesehen ist, bis auf einen kurzen Abstand von dem genannten Schalter (15') frei verschiebbar zu sein, ohne mechanisch auf dieses einzuwirken.

13. Linearantrieb nach einem beliebigen der vorstehenden Patentansprüche, **dadurch gekennzeichnet, dass** das zweite Ende der Schraube (8) auf ein Stellorgan (20) eines Zahnrades (21) einwirkt.

## Revendications

1. Un actuateur linéaire, en particulier pour des engrenages dentés, comprenant un châssis (1) et un corps intermédiaire rotatif (4), libre en rotation par rapport audit châssis (1), lequel corps rotatif (4) est pourvu d'une roue dentée externe (5) qui s'engrène sur un pignon (3) fixé sur une extrémité d'un arbre d'un moteur électrique (2), et lequel corps rotatif (4) est de plus pourvu d'une vis mère passante (6) disposée coaxialement à ce dernier; ledit corps (4) pouvant glisser axialement dans deux directions selon une course d'entité prédéterminée maintenant l'engrènement entre ladite roue dentée externe (5) et ledit pignon (3); comprenant de plus: un ressort calibré (7) opérant coaxialement entre ledit châssis (1) et ledit corps (4); une vis (8) accouplée coaxialement avec ladite vis (6) et présentant une première extrémité accouplée à un logement prédisposé sur ledit châssis (1) avec un accouplement prévenant une rotation relative en permettant un glissement axial libre; au moins un interrupteur (9, 9') contrôlant ledit moteur électrique (2), lequel interrupteur (9, 9') est activé par ledit corps rotatif (4), ledit interrupteur (9, 9') étant actionné par ledit corps rotatif (4) avec un relatif mouvement de glissement dans lequel le corps (4) n'est jamais mécaniquement et rigidement fixé audit interrupteur (9, 9'), **caractérisé en ce que** ledit interrupteur (9) est actionné par ledit corps rotatif (4) par l'intermédiaire de moyens de transmission élastiquement déformables.

2. L'actuateur linéaire de la revendication 1, **caractérisé en ce que** lesdits moyens de transmission sont élastiquement déformables dans une direction parallèle à l'axe de rotation du corps rotatif (4).

3. L'actuateur linéaire de la revendication 2, **caractérisé en ce que** lesdits moyens de transmission comprennent, alignés et guidés pour glisser axialement l'un consécutivement à l'autre, un distanceur mobile (34), un ressort (35), un pivot de fin de course (36) et un ressort de contraste (37); ledit distanceur mobile (34) ayant une extrémité prédisposée pour entrer en contact direct avec la partie frontale dudit corps intermédiaire rotatif (4); ledit ressort (35) étant prédisposée pour opérer entre ledit distanceur mobile (34) et ledit pivot de fin de course (36); ledit ressort de contraste (37) étant prédisposé pour opérer entre ledit pivot de fin de course (36) et une butée (38) fixée au châssis (1).

4. L'actuateur linéaire de la revendication 3, **caractérisé en ce que** ledit ressort (35) est plus rigide que le ressort de contraste (37), par rapport auquel il agit coaxialement.

5. L'actuateur linéaire de la revendication 4, **caractérisé en ce que** la première extrémité de la vis (8) présente une tête hexagonale (18) contenue à l'intérieur d'un guide prismatique (10) solidaire du châssis (1) et accouplée à ce guide (10) avec un jeu prédéterminé.

6. L'actuateur linéaire de la revendication 4, **caractérisé en ce que** ledit interrupteur (9) est prédisposé de manière à être activé lorsque ledit corps (4) est dans une position axiale extrême dans laquelle ledit ressort (7) exerce une force axiale prédéterminée.

7. L'actuateur linéaire de la revendication 4, **caractérisé en ce qu'**il comprend un interrupteur de fin de course de retour (15) activable par la tête (18) de la vis (8) dans une position extrême d'entrée maximum de la vis (8) par rapport au châssis (1) au moyen d'un dispositif de transmission élastiquement déformable.

8. L'actuateur linéaire de la revendication 7, **caractérisé en ce que** ledit dispositif de transmission est élastiquement déformable dans une direction parallèle à l'axe de la vis (8).

9. L'actuateur linéaire de la revendication 8, **caractérisé en ce que** ledit dispositif de transmission comprend, alignés et guidés pour glisser axialement l'un consécutivement à l'autre, un distanceur mobile (34), un ressort (39), un pivot de fin de course (40) et un ressort de contraste (41); ledit ressort (39) étant prédisposé pour opérer entre la tête (18) de la vis (8) et ledit pivot de fin de course (40); ledit ressort de contraste (41) étant prédisposé pour opérer entre ledit pivot de fin de course (40) et une butée (42) fixée au châssis (1).

10. L'actuateur linéaire de la revendication 1 ou 6, **caractérisé en ce que** ledit interrupteur (9') est actionné par un élément d'actionnement (29) fixé sur un distanceur mobile (34'), une autre extrémité dudit distanceur mobile (34') étant prédisposée pour entrer en contact directement avec une partie frontale dudit corps intermédiaire rotatif (4), et le distanceur mobile (34') étant mobile dans une direction parallèle à l'axe de rotation du corps (4); ledit élément d'actionnement (29) étant prédisposé pour translater librement à courte distance dudit interrupteur (9') sans interférer mécaniquement avec ce dernier.

11. L'actuateur linéaire de la revendication 10, **caractérisé en ce qu'**il comprend un interrupteur de fin de course de retour (15') actionnable au moyen d'une vis (8) dans une position d'entrée maximum par rapport au châssis (1).

12. L'actuateur linéaire de la revendication 11, **caractérisé en ce que** ledit interrupteur (15') est actionné par un élément d'actionnement (45) fixé sur un support fixé à la tête (18') de la vis (8); ledit élément d'actionnement (45) étant prédisposé pour translater librement à courte distance dudit interrupteur (15') sans interférer mécaniquement avec ce dernier.

13. L'actuateur linéaire de n'importe laquelle des revendications précédentes, **caractérisé en ce que** la seconde extrémité de la vis (8) agit sur un organe de manoeuvre (20) d'une roue dentée (21).
